# EUROPEAN PATENT APPLICATION

(11) **EP 3 101 334 A1**
(43) Date of publication of application: **07.12.2016**
(21) Application number: 16172754.0
(22) Date of filing: 02.06.2016
(51) Int. Cl.: F21S 8/10

(54) **AUTOMOTIVE LIGHTING DEVICE THAT PROJECTS A VIRTUAL 3D IMAGE OR LIGHT**

(30) Priority: 04.06.2015 US 201514730486
(71) Applicant: Valeo North America, Inc, 93012 Bobigny Cedex (FR)
(72) Inventor: KING, Robert L., SEYMOUR, IN Indiana 47274 (US)

(57) **Abstract**

A system of reflectors forms a real or virtual image of an object, and causes the image to float in space inside or outside a vehicle. This real or virtual image may be used as a decorative element in a vehicle. The real or virtual image can also function as an illuminated light for the vehicle, such as a clearance light.

## Description

### BACKGROUND OF THE INVENTION

### 1. Field of the Invention

This invention relates to an automotive lighting device and, more particularly, an automotive lighting device that projects a virtual three-dimensional image or light.

### 2. Description of the Related Art

In the past, vehicle manufacturers have strived to provide new and unique features that will be attractive to the consuming public. Accordingly, new and improved vehicle lighting systems, such as LED headlight and tail light systems, have been developed to generate a light that provides a function, such as a headlight or tail lamp function, turn signaling function, marker light or side light function, fog light function or the like.

Various toys and scientific apparatus have been created to provide or attempt to provide a 3-D effect. One example is the novelty device sold under the name "3-D Mirascope", available from Toysmith Group, Inc. of Sumner, WA.

There is always a need to improve the lighting functions or effect, particularly to enhance the aesthetic appeal of the vehicle to consumers.

### SUMMARY OF THE INVENTION

It is, therefore, one object of one embodiment of the invention to provide a new and improved lighting system that is capable of generating a mirage effect that will demonstrate a virtual or real image either within or outside the vehicle.

The term "real image" is a term-of-art in the field of optics and means that the image I actually exists in space and gives the appearance that the object O is actually located where the real image I is present.

Another object of one embodiment of the invention is to provide a real or virtual image that is viewable to a person who approaches the vehicle.

Still another object of one embodiment of the invention is to provide a lighting system that produces a real or virtual image that will appear to float in space, even outside the vehicle, such as outside a lamp assembly for the vehicle.

Yet another object of one embodiment of the invention is to provide a real or virtual image that appears to float in space and that is viewable from many different degrees, such as between approximately 45° to 360°.

Another object of one embodiment of the invention is to provide a uniquely styled lamp that will generate a virtual or real image that appears to float and wherein the virtual or real image comprises at least one of an alphabetic character, a numeric character, a logo, a sculptural work or other images or displays.

Yet another object of one embodiment of the invention is to provide a lighting device comprising an array of mirrors that are adapted to produce the virtual or real image.

Another object of one embodiment of the invention is to provide at least one pair of generally opposed mirrors with an object situated at a focus of one of the mirrors and wherein the mirrors cooperate to generate the virtual or real image through an aperture in the other of the mirrors. In other embodiments, a plurality of the pairs or sets of mirrors are provided to produce a plurality of images that cooperate to generate the virtual or real image.

In one aspect, one embodiment comprises an image generator for a vehicle, comprising a physical object and generates or causes light rays originating at said physical object to form a real image of said physical object in relationship to an aperture.

In another aspect, one embodiment comprises a system for mounting on a vehicle comprising a first concave mirror, a second concave mirror generally opposed to and facing said first concave mirror and having an aperture, an object located between said first concave mirror and said second concave mirrors which is reflected into a real image in relationship to said aperture.

In another aspect, one embodiment comprises a system comprising a first parabolic reflector having a first focus and a first central axis on which the first focus resides and which contains an aperture through which the first central axis passes, a second parabolic reflector having a second central axis which coincides with the first central axis and having a second focus on the first central axis and positioned so that the first focus lies between the first parabolic reflector and the second parabolic reflector, and an object located at the first focus.

This invention, including all embodiments shown and described herein, could be used alone or together and/or in combination with one or more of the features covered by one or more of the following list of features:
- The image generator wherein the real image is displayed inside the vehicle and contains information which is used by a person riding in the vehicle in operating a component of the vehicle.
- The image generator wherein the real image contains information which identifies a characteristic of the vehicle or a manufacturer of the vehicle.
- The image generator wherein the information comprises three-dimensional alphanumeric characters.
- The image generator wherein the physical object comprises a light source.
- The image generator wherein the real image of the physical object is displayed outside the vehicle.
- The image generator wherein the real image forms a lighting or signaling light for the vehicle.
- The image generator wherein the physical object comprises a multi-pixel image display comprising a plurality of pixels, wherein each pixel is independently actuable by a user.
- The image generator wherein the image is a decorative element of the vehicle.
- The image generator wherein the image is adjacent an engine cover of the vehicle.
- The image generator wherein the apparatus comprises a first concave mirror having a first concavity, and a second concave mirror having a second concavity, wherein each of the first concave mirror and the second concave mirror are generally opposed to each other and the first concavity and the second concavity form a chamber, wherein the physical object is located within the chamber.
- The image generator wherein the first concave mirror and the second concave mirror each comprise a reflective side that generally oppose each other.
- The image generator wherein the image generator comprises a plurality of pairs or sets of the first concave mirror and the second concave mirror, the pairs or sets generating a plurality of images that cooperate to define the real image.
- The image generator wherein the first concave mirror has a wall that defines an aperture through which the image generator directs light from the physical object to cause the real image to be generated outside the aperture.
- The image generator wherein the image generator is mounted in a headlamp assembly of a vehicle.
- The image generator wherein the image is visible outside the chamber.
- The image generator wherein the physical object is located at a focus of one of the first concave mirror or the second concave mirror.
- The system wherein the image is a decorative element of the vehicle.
- The system wherein the image is adjacent a surface of the vehicle.
- The system wherein the system further comprises the first concave mirror having a first concavity, the second concave mirror having a second concavity, wherein each of the first concave mirror and the second concave mirror are generally opposed to each other and the first concavity and the second concavity form a chamber, wherein the object is located within the chamber and said real image is formed outside the chamber.
- The system wherein the image generator comprises a plurality of pairs or sets of the first concave mirror and the second concave mirror, the pairs or sets generating a plurality of images that cooperate to define the real image.
- The system wherein the image is visible outside the chamber.
- The system the system further comprising a light source for illuminating the object.
- The system wherein the object is illuminescent.
- The system wherein the image comprises indicia that identifies at least one of an alphanumeric character, a numeric character, a non-numeric character, a trademark or a logo.
- The system wherein the system comprises a lens or cover associated with the aperture.
- The image generator wherein a ratio of focal points is the same.
- The image generator wherein a ratio of focal points is different.
- The system in which an image of the object is created near the aperture but not between the first parabolic reflector and the second parabolic reflector.
- The system in which the object is self-luminous and the image is self-luminous.

These and other objects and advantages of the invention will be apparent from the following description, the accompanying drawings and the appended claims.

### BRIEF DESCRIPTION OF THE ACCOMPANYING DRAWINGS

Fig. 1 is an annotated rendition of a prior art mirror;
Fig. 2 illustrates a parabolic mirror having a focus;
Fig. 3 illustrates parallel light rays projected by the parabolic mirror of Fig. 2;
Fig. 4 illustrates a second parabolic mirror which reflects the parallel light rays of Fig. 3 to the focus in Fig. 4;
Fig. 5 illustrates a third parabolic mirror focusing an image of an object which is not coincident with the focus of the third parabolic mirror;
Fig. 6A illustrates the use of one form of the invention to generate a decorative accent for a vehicle, such as a hood ornament, which floats above the surface of the vehicle;
Fig. 6B is a schematic illustration of an image generator inside a headlamp assembly;
Figs. 7A, 7B, 7C, and 7D illustrate another form of the invention;
Fig. 8 illustrates an object having three-dimensional printing or indicia in the form of the word "ACME";
Fig. 9 illustrates a clearance light or marker light as used on vehicles in the prior art;
Figs. 10A, 10B, and 10C illustrate one form of the invention generating a floating image of a light in Fig. 10C which functions as a light, such as a marker light of Fig. 9;
Fig. 11 illustrates the use of a video display, such as an LED display, which contains pixels as the object whose image is projected by the invention;
Fig. 12 illustrates an array of sixteen pairs of mirrors, each pair containing mirrors;
Fig. 13 illustrates the array of Fig. 12 that is manufactured as by an injection molding process;
Fig. 14 illustrates the apparatus of Fig. 13 in assembled form;
Fig. 15 is a cross sectional view of Fig. 14 taken along a plane;
Fig. 16 illustrates the apertures of Fig. 14 projecting globes of light;
Fig. 17 illustrates one form of the invention having elongated mirrors of parabolic cross section or cross sections of other types of curve;
Fig. 18 illustrates one form of the invention;
Fig. 19 is a cross sectional view of the apparatus of Fig. 18;
Fig. 20 illustrates one form of the invention in which four apparatus of the type shown in Fig. 18 are arranged so that their apertures AP form a rectangle;
Fig. 21 illustrates one form of the invention in which the apparatus of Fig. 20 projects a luminous frame which floats in air;
Fig. 22 resembles Fig. 20, but in Fig. 22 the apertures form a seven segment display;
Fig. 23 illustrates the seven segment display of Fig. 22 projecting the numeral 6 which floats in air;
Fig. 24 illustrates how the spacing between apertures in Fig. 14 can be reduced by truncating the mirrors at dashed lines;
Fig. 25 illustrates reduced spacing attained by the stratagem of Fig. 24;
Fig. 26 illustrates another way to reduce spacing between apertures, wherein two different types of mirror-pairs are used at different levels;
Figs. 27, 28, 29, and 30 illustrate more details of the Figures described above;
Figs. 31 and 32 show an embodiment of the invention that includes one or more lenses;
Fig. 33 shows a virtual hood ornament created by the image generator;
Fig. 34 shows an embodiment of the invention and the relationship of the mirrors and the real and virtual images;
Fig. 35 illustrates the use of the system as it would be used on a vehicle and the viewing angles; and
Fig. 36 shows illustrates one form of the invention with the aperture being covered by a lens or cover.

### DETAILED DESCRIPTION OF THE PREFERRED EMBODIMENTS

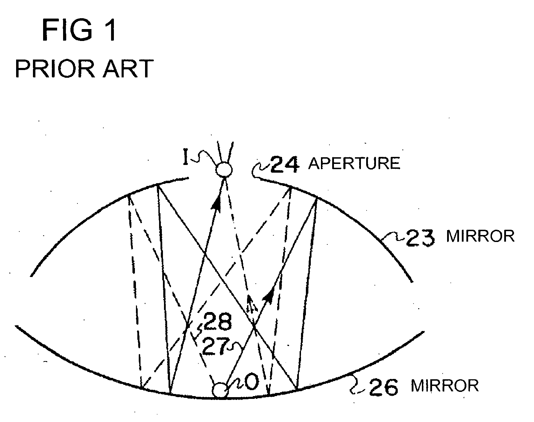

Fig. 1 is a view of a prior art mirror similar to which is shown in U.S. Patent 3,647,284 which is hereby incorporated by reference and made a part hereof. The prior art Fig. 1 illustrates two mirrors 23 and 26 that are generally opposed and with a physical object O located between them. The particular configuration of the mirrors 23 and 26 causes the light rays 27 and 28 to generate a real image I in space. The term "real image" is a term-of-art in the field of optics and means that the image I actually exists in space and gives the appearance that the object O is actually located where the real image I is present. In optics, a real image is an image which is located in the plane of convergence for the light rays that originate from a given object. If a screen is placed in the plane of a real image the image will generally become visible on the screen.

This latter fact is significant and is here re-emphasized. The image I (Fig. 1) has all, or nearly all, the physical appearance of the object O itself. Because of this appearance, an observer will perceive that the object O is actually present at the location of the image I.

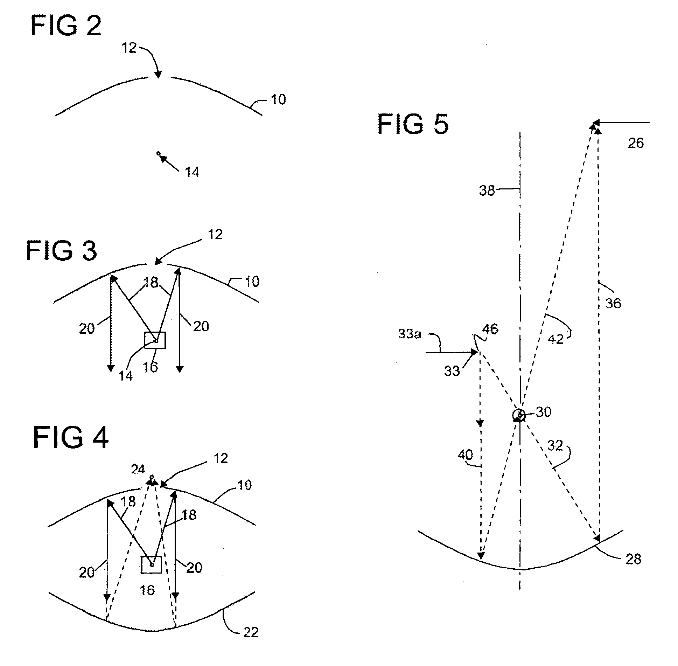

Figs. 2 - 5 illustrate basic optical principles which can assist in understanding how the apparatus of Fig. 1 functions. In Fig. 2, a first parabolic mirror 10 contains an aperture 12. A focus 14 of the first parabolic mirror 10 is indicated.

In Fig. 3, an object 16 present at the focus 14 (Figs. 2 and 3) will generate rays 18, which are reflected by the first parabolic mirror 10 to become rays 20 that are parallel to each other because the object 16 is placed at the focus 14.

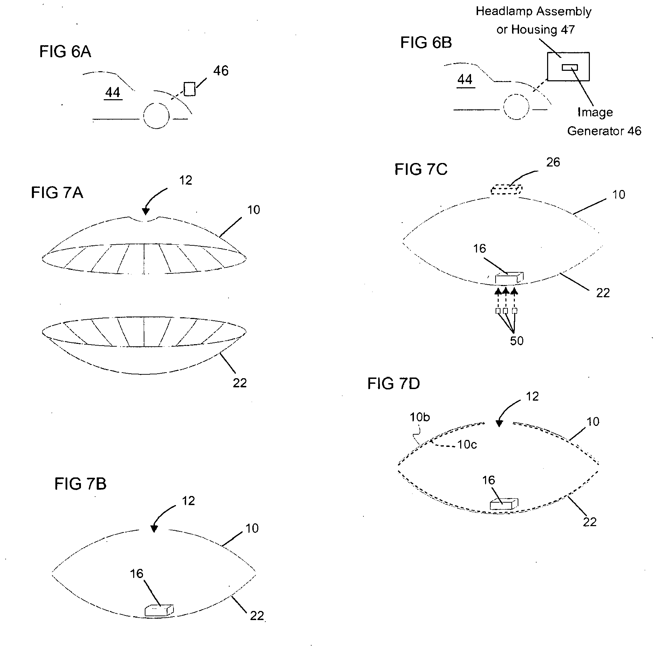

In Fig. 4, a second parabolic mirror 22 is present. The second parabolic mirror 22 receives the parallel rays 20 and reflects them to its own focus 24 as indicated. The first and second parabolic mirrors 10 and 22 each have a reflective side 10c that face and are generally opposed to each other as shown in Fig. 7D. It is noted that a focus 24 can lie within, above or below the aperture 12 (Fig. 4) depending on the position or size of the second parabolic mirror 22. That is, the distance between the focus 24 and the second parabolic mirror 22 is fixed and is a property of the parabolic shape of the second parabolic mirror 22. Thus, the position of the focus 24 and thus the position of an image 26 (Fig. 7C) will depend on the position and/or shape of the second parabolic mirror 22. In a strict sense, the focus 14 in Fig. 3 is a geometric point and has only position and no dimensions or size. However, an object 16 does possess size since it occupies space and thus only a single point on the object 16 will coincide with focus 14. Nevertheless, light rays 18 emanating from the object 16 can be properly focused into the image 26 near the focus 24 as the ray trace diagram of Fig. 5 indicates in general terms.

Fig. 5 shows a third parabolic mirror 28 and its focus 30. An object in the form of an arrow head 33 is located near and not coincident with the focus 30. A ray 32 emanating from the arrow head 33 passes through the focus 30 and will thus be reflected as a ray 36, which is parallel to the axis 38 of the third parabolic mirror 28. Another ray 40 also emanates from the arrow head 33 travels parallel to the axis 38 and will thus be reflected as ray 42 which travels through the focus 30. These rays 32, 36, 40 and 42 will intersect and form the image 26 of the arrow head 33 spaced from the third parabolic mirror 28.

A similar analysis can be applied to the tail 33a (Fig. 5) of the arrow head 33 to show that an image of the tail 33a is created at image 26. Therefore, it has been shown that a parabolic mirror will create an image of an object which is located near its focus.

One form of the invention is used in connection with a vehicle 44, as shown in Fig. 6A. Fig. 6B is a schematic illustration of one embodiment showing an image generator 46 inside a headlamp assembly 47. The image generator 46 (shown schematically in Figs. 6A and 6B) of the type described herein generates a label, advertising trademark, logo, indicia or the like and projects it at a desired location, such as outside the vehicle 44 where it can be viewed or observed by a person. Figs. 7A-7D indicate an exemplary mode of constructing the image generator 46. Fig. 7A is an exploded view of two parabolic mirrors 10 and 22. Fig. 7B shows the first parabolic mirror 10 and the second parabolic mirror 22 generally opposed and in assembled form. Fig. 7C shows the first parabolic mirror 10 and the second parabolic mirror 22 generating the real image 26 of the object 16 located at the aperture 12. Fig. 7D illustrates one mode of construction. The first parabolic mirror 10 and the second parabolic mirror 22 can be constructed of a substrate 10b which could be a plastic resin which supports or receives a reflective coating 10c such as aluminum or an aluminum alloy. It should be understood that other materials could be used to construct the substrate or the reflective coating.

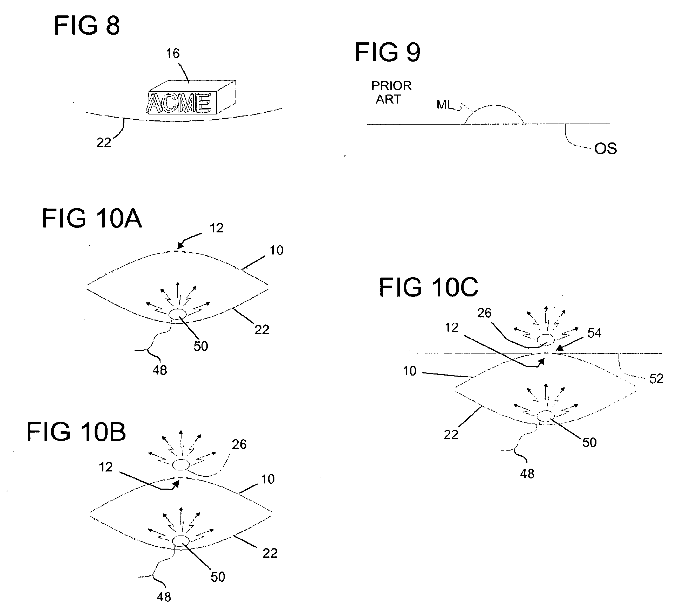

The object 16 can contain any desired predetermined image, indicia, form or shape. For example, the image could comprises a three-dimensional lettering as shown in Fig. 8 which shows a trademark, such as the term "ACME" in the example, contained on the object 16. The projected image 26 in Fig. 7C will correspondingly contain similar three-dimensional lettering. Thus, the image generator 46 in Fig. 6A will generate a three-dimensional real optical image 26 which in this example contains three-dimensional text. Again, it does not have to be text and could take other images, shapes or visual effect. For example, one form of the invention can be used to create external lighting for the vehicle having novel optical properties. Fig. 9 is a schematic of a prior art marker light ML, sometimes called a clearance light, such as that used on semi-trailers. It is significant that the marker light ML protrudes from the outer surface OS of the vehicle. It is thus subject to breakage and it generates some aerodynamic drag. The invention can eliminate the external protrusion and the accompanying risk of breakage and drag. Fig. 10A illustrates the first parabolic mirror 10 and the second parabolic 22. The object within the first and second parabolic mirrors 10 and 22 is a light source 50 (Fig. 7C), which can be one or more light-emitting diodes (LEDs). A power cord or connection 48 (not shown) extends from the light source 50 and is electronically coupled to a power source (not shown). In one embodiment, the light source 50 may be mounted on a printed circuit board (PCB) that is mounted between the first parabolic mirror 10 and second parabolic mirror 22.

In Fig. 10B, the image 26 appears outside the aperture 12 and is the real image of the light source 50. If the apparatus of Fig. 10B is positioned adjacent an outer surface 52 of the vehicle, as in Fig. 10C, and if a transparent window 54 is provided, then the self-luminous image 26 will float in the air, adjacent the vehicle 44 (not shown in Figs. 10A-10C). The image 26 will transmit light but will not be subject to breakage and will not generate an aerodynamic drag. The embodiment of Fig. 10C may be of particular interest to automotive enthusiasts who equip their vehicles with creative illumination. For example, several of the self-luminant images 26 of Fig. 10C can be generated by several devices and could be positioned beneath a vehicle for night time usage.

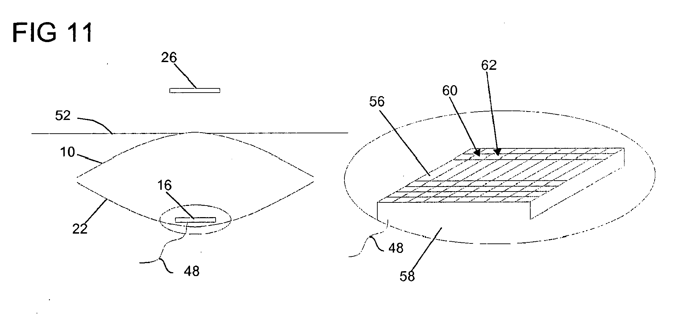

In another form of the invention, the object 16 of Fig. 7B can take the form of a video display or array 56 as indicated in the insert 58 of Fig. 11. The video display 56 contains individual pixels 60 and 62 and so on. The video display 56 can take the form of an LED display or equivalent. It is not necessary that a moving video image be created as perhaps implied by the term "video," but the video display 56 can present static images as well. As an example, the type of display used in a conventional cell phone can be used, but preferably one which produces greater light intensity.

Such a video display 56 can create information within the real image 26 in Fig. 11. For example, the video display 56 of Fig. 11 can be associated with a radio in the vehicle of Fig. 6A and the video display 56 can display a radio station's frequency, in the form of a real optical image which is self-luminous and which floats in space adjacent the radio, similar to the image 26 of Fig. 11 being projected or floating adjacent to the outer surface 52 of the vehicle 44.

In general, the information of any instrument located on the dashboard of the vehicle 44 can be presented by this type of device and specifically including (1) vehicle speed, (2) tire pressure, (3) temperatures of various fluids, (4) temperatures within or outside the vehicle, (5) electrical and engine parameters, and so on. In a specific embodiment, the device will remain dormant until one of the parameters rides out of its normal operating range. For example, the central computer (not shown) can monitor these parameters. If coolant temperature exceeds a predetermined limit, then the display device is called into action to generate a warning alarm or indicia which floats in space. This type of warning alarm or indicia may attract the attention of a driver more effectively than other types of visual warnings.

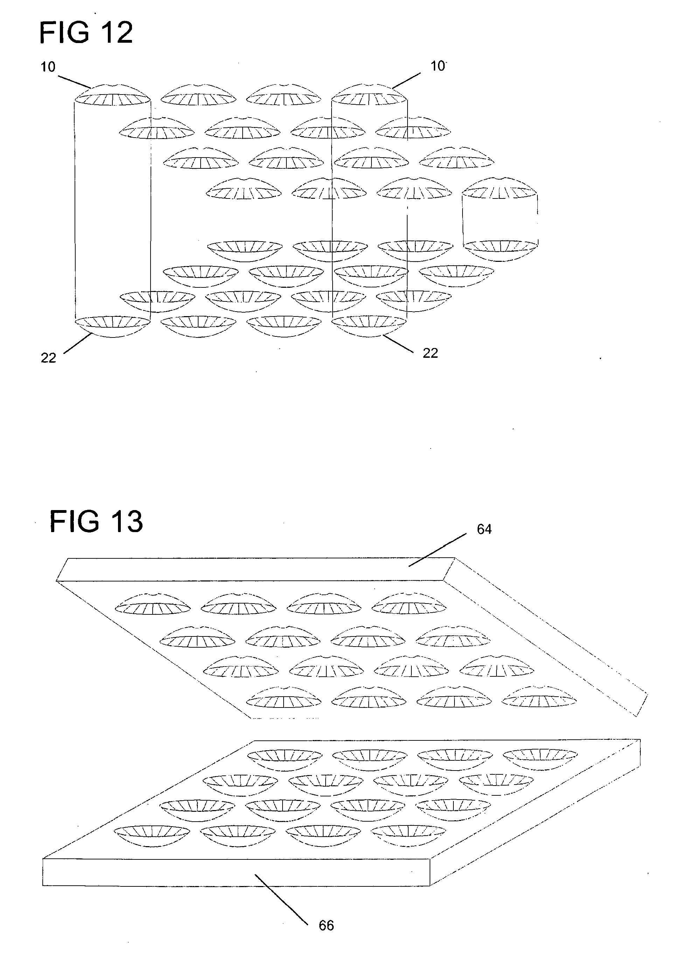

In another form of the invention, each mirror-pair of the type shown in Figs. 7A-7D generates a single pixel in a display. The pixel is, in essence, formed by the real image 26 present at the aperture 12. Multiple such pairs are arrayed to generate multiple pixels and thus generate an entire display. Figs. 12 - 16 illustrate these concepts. Fig. 12 illustrates sixteen pairs of the first parabolic mirror 10 and the second parabolic 22 in exploded form. Fig. 13 illustrates how these pairs can be manufactured, molded or formed such as by conventional injection-molding techniques into two blocks of material 64 and 66.

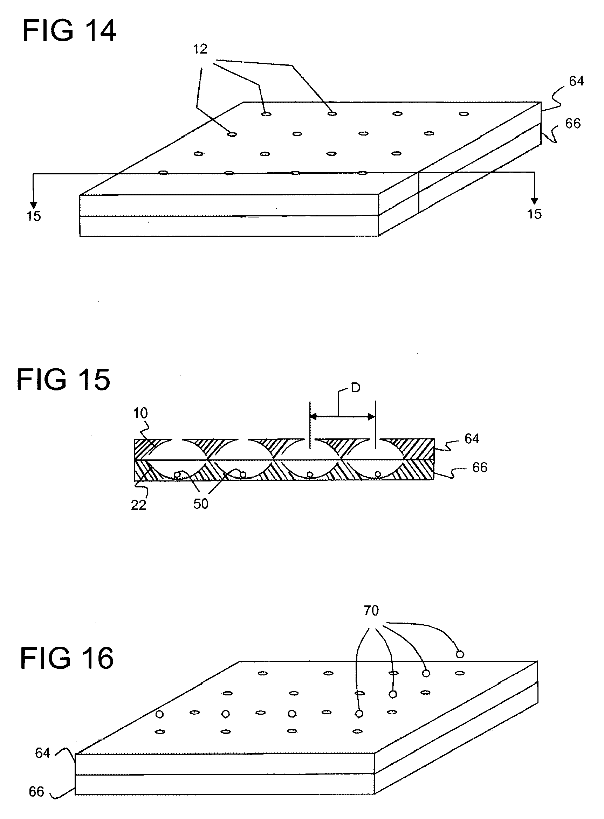

Fig. 14 illustrates the blocks of material 64 and 66 in assembled form. An aperture 12 for each of the first parabolic mirror 10 and the generally opposing second parabolic 22 is shown. Fig. 15 is a cross-sectional view taken along line 15-15 in Fig. 14. A light source 50 is present adjacent each of the first parabolic mirror 10 and the second parabolic 22 mirror. In operation, each light source 50 is coupled to and under the control of a microprocessor or controller that selectively activates the light sources 50 to cause an illuminated image or globe of light to appear above each aperture 12 as indicated by the phantom or real image globes 70 in Fig. 16.

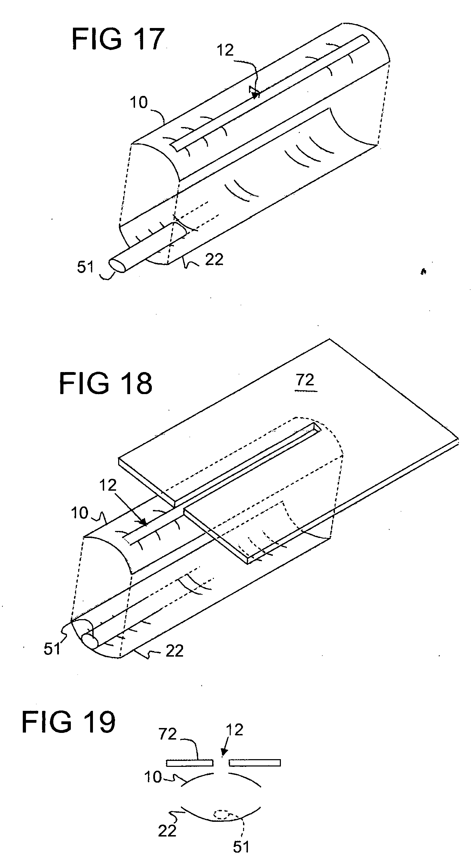

The devices described so far have implemented parabolic mirrors or mirrors employing other types of curve, but which are generally symmetric about axis 38 in Fig. 5. However, another type of mirror can be used as shown in Fig. 17. The first parabolic mirror 10 and the second parabolic 22 are parabolic in cross section but elongated, with the aperture 12 shown. An elongated light source 51 is shown which is analogous in function to the objects 16 described above.

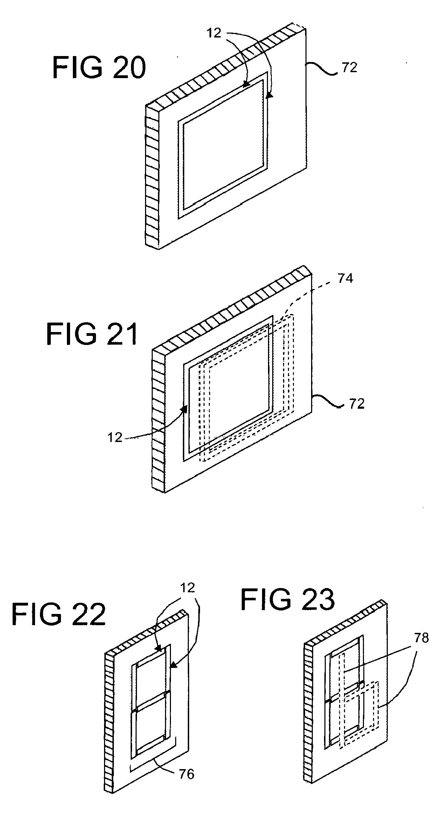

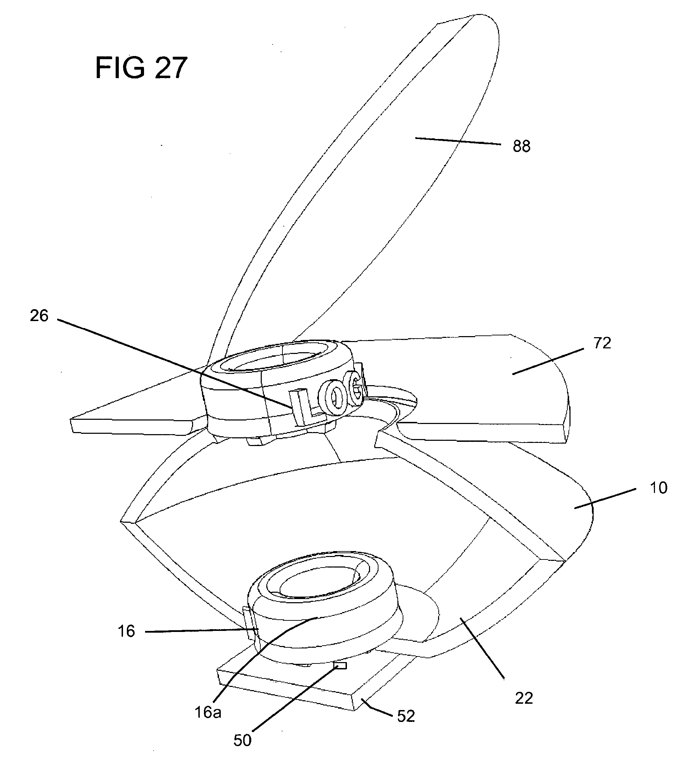

Figs. 18 and 27 show an outer surface, which may be an outer surface 72 of the vehicle 44 (Fig. 6A), added which may be a decorative barrier or the external surface of the vehicle 44. Four such devices can be arranged, for example, so that their elongated apertures 12 are arranged as in Fig. 20. When the light source 51 of Fig. 18 is illuminated, the apparatus of Fig. 21 will generate a luminous frame 74 which provides the real image 26 that appears to the viewer to be floating in space. This luminous frame 74 can be used as an accent to decorative features of a dashboard of a vehicle. It should be understood that the image 26 generated could be an image that is not required by regulation or law, such as a lighting or signaling legal requirement. For example the image 26 could be a three dimensional alpha-numeric or non-alpha-numeric image, such as a decorative element, design, pattern or other work.

These apertures 12 can also be arranged into a seven segment display 76 as in Fig. 22. The light source 51 shown in Fig. 18 can be selectively actuated to form characters, numbers or an alphanumeric character, such as the number "6" labeled as 78 in Fig. 23.

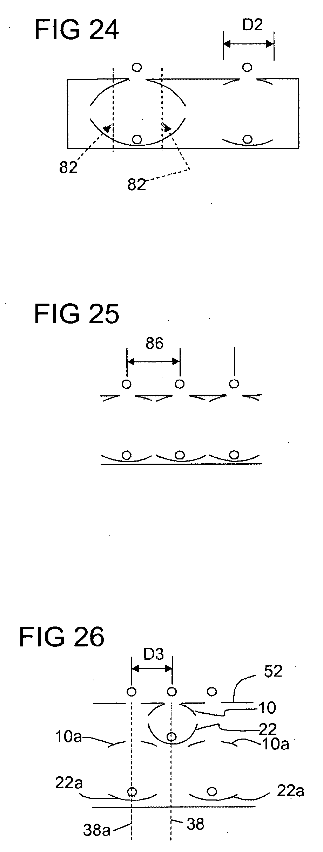

In Fig. 14, the minimum distance between adjacent apertures 12 is limited by the diameter of the first and second parabolic mirrors 10 and 22 as indicated by distance D in Fig. 15. However, if the first and second parabolic mirrors 10 and 22 are truncated at dashed lines 82 as in Fig. 24, then a mirror of reduced diameter D2 will be attained to allow closer spacing. Fig. 25 illustrates the reduced spacing 86.

The spacing can be reduced in different ways as well. For example, Fig. 26 shows two different mirror-pairs. One pair includes the first parabolic mirror 10 and the second parabolic 22. The other includes a first parabolic mirror 10a and a second parabolic 22a. However, the upper or first parabolic mirrors 10 and 10a are of different shape with respect to each other, and the lower or second parabolic mirrors 22 and 22a are also of different shape with respect to each other. As a result, the image projected by the pair of the first and second parabolic mirrors 10a, 22a is farther from the image projected by the pair of parabolic mirrors 10, 22. Consequently, the pair of the first and second parabolic mirrors 10a, 22a can be displaced downward with respect to the pair of the first and second parabolic mirrors 10, 22 in a nested arrangement. With this arrangement, the distance D3 (Fig. 26) between adjacent axes 38 and 38a can be less than the diameter of the larger pair of the first and second parabolic mirrors 10, 22 or 10a, 22a.

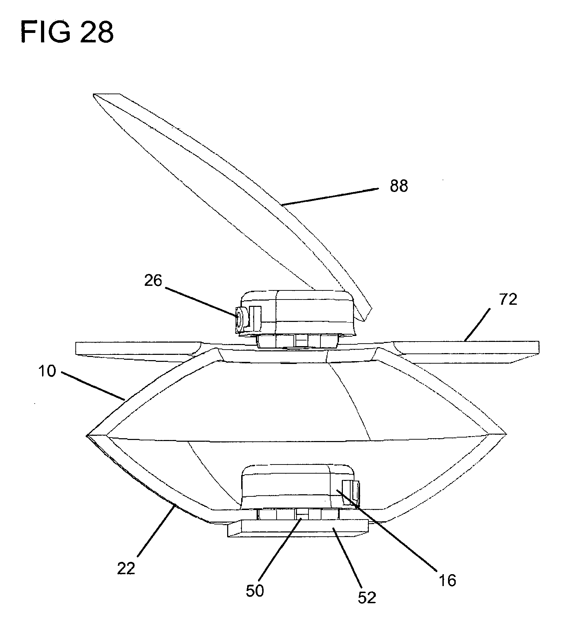

Figs. 27 and 28 illustrate two views of another embodiment of the invention. An optional optic reflector 88 has been added. Ordinarily, the image 26 is viewable for 360 degrees. The reflector 88 serves to direct the image 26 into a specific direction.

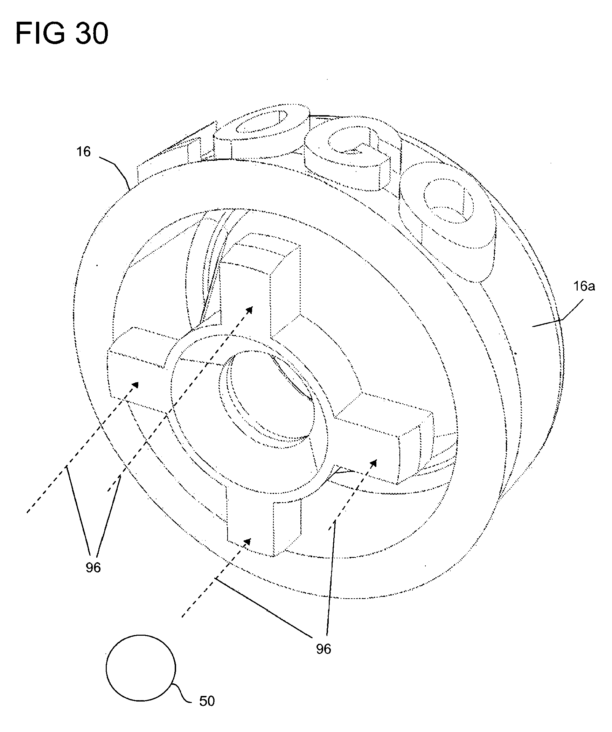

An illuminator in the form of an LED or light source 50, which is mounted on a printed circuit board (PCB) 52 is shown, which projects light into the object 16 to make the object 16 self-luminous. Fig. 30 illustrates the object 16 in enlarged form and shows in greater detail the text formed into the object 16 the text containing the word "LOGO." In the embodiment, the object 16 is transparent and projects the light through its body 16a and through the LOGO text. The arrows in Fig. 30 represent light rays 96 provided by the light source 50 in Figs. 27 and 28.

Light pipes or optical cables (not shown) can extend between the light source 50 and the object 16 to illuminate the object 16, either from within or externally.

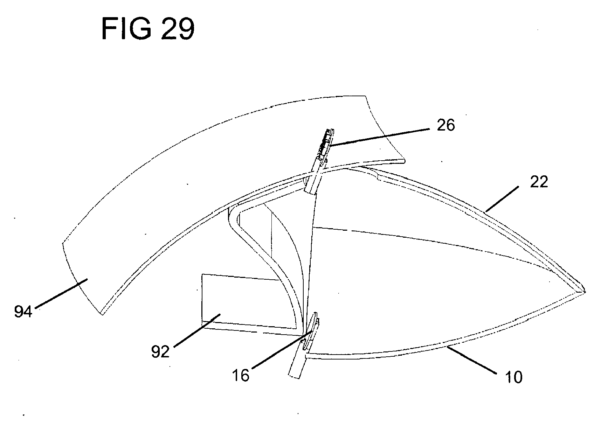

Fig. 29 illustrates an added decorative shroud or cover 92 which conceals the first and second parabolic mirrors 10 and 22. Also, an outer lens 94 is provided. One function of the outer lens 94 is to protect the invention from the weather, and not necessarily to provide a focusing function, although the latter is possible.

### ADDITIONAL CONSIDERATIONS

In one form of the invention and as mentioned earlier, the real image 26 contains text or an image which conveys information. That information may identify the manufacturer of the vehicle 44 or the brand of the vehicle 44, such as General Motors brand "Chevrolet." The image 26 could be an advertisement as well. A hood ornament or label on the vehicle 44 may provide this function, or the information may provide assistance in operating a component of the vehicle 44. For example, the information may be projected inside or outside the vehicle, depending on where the image generator 46 is mounted. As mentioned earlier, the real image 26 may indicate the speed of the vehicle or the condition of a component of the vehicle such as the level of coolant, or as stated, the real image 26 may identify the manufacturer.

It is not seen as strictly necessary that the image 26 in Fig. 7C be a real image. A real image has the property that it can be projected onto a sheet of frosted glass, for example. A virtual image, in contrast, such as that seen through a magnifying glass, cannot be so projected of itself, yet it can be seen by the human eye which captures the virtual image and creates a real image on the retina.

The two focal distances (i.e., the shortest distance from the focus to its mirror) of the first and second parabolic mirrors 10 and 22 may be equal or unequal. In one form of the invention, the distance between the real image 26 and the aperture 12 is less than either focal distance.

The discussion above mentioned three-dimensional characters, such as the words "ACME" of "LOGO" in the Figures. One characteristic of three-dimensional characters is that they have depth (i.e., a third dimension) and the depth is visible. For example, printed characters on a sheet of paper are composed of a layer of ink and thus have a type of depth since the layer of ink has some thickness. However, that depth is not perceptible to the ordinary observer. Further, if a 35 mm slide were made of the characters and the slide projected onto a screen, the characters would be present and yet would have zero depth. Therefore, it can be said that printed characters have no significant depth because they look essentially the same whether on printed paper or projected from a slide. In one form of the invention, the depth of the three-dimensional characters in the image 26 appears to be at least 1/16 inch or 1 mm.

As alluded to earlier, the object 16 to be projected may contain alphabetic or numeric characters or any other shape or image, such as a three-dimensional sculptural image (e.g., a corporate logo) or sculptural work.

One meaning of the term "self-luminous," when applied to the object 16 in the Figures, is that the object 16 generates light. This light can be provided by an external source, such as the LEDs or light sources 50 in the Figures. Also, the object 16 may be luminescent, or phosphorescent or contain luminescent or phosphorescent materials. The object 16 can also contain a radioactive material which generates light.

The mirage effect will demonstrate a virtual image of a "logo" light that is viewable when a viewer approaches the vehicle. The virtual image will appear to float in space, even outside the lamp (e.g., a floating "Chevrolet" logo on top of the tail lamp. The floating image, which is not really there, could hover in a hole of the bezel while a focused signal light could still be sent to the beam pattern from that hole. The virtual image has a fairly large viewing area (up to 360 degrees around by 45 degrees).

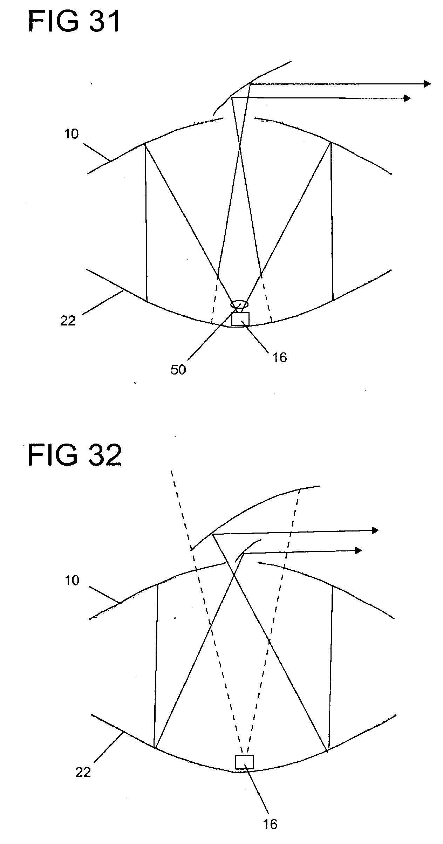

This idea is truly unique and adds another styling option. The floating virtual image will enhance the aesthetic with the "wow, that's cool!" reaction. The technical solution uses two opposing parabolic reflector surfaces, a target image and a hole to project the virtual image to. When looking through the virtual image hole at the right angle, the eye perceives a floating duplicate target. The virtual target can be solid, clear, lit up, glowing or the like. Also, the image generator 46 may include one or more lenses or light guides as shown in Figs. 31 and 32. These lenses may be thin or thick, and the light guides may optionally be capable of total internal reflection (TIR).

The image generator 46 may be mounted anywhere on the vehicle, such as attached to the front of the vehicle, including in the headlight or tail lamp assemblies of the vehicle.

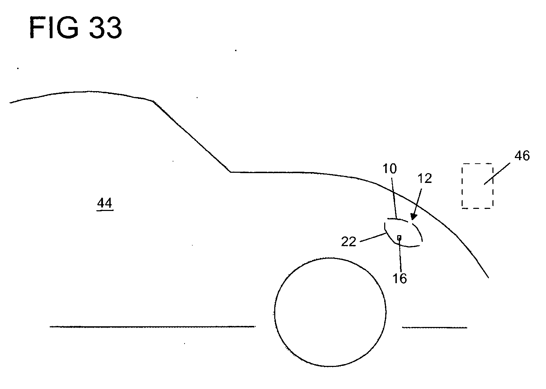

Advantageously, the image generator 46 is adapted to create a mirage effect for a vehicle. Again, Fig. 33 shows a virtual hood ornament created by the image generator 46. Also, the logo could be projected on the deck of the car trunk.

The invention could also provide a real or virtual image that appears to float in space and that is viewable from many different degrees, such as 45° to 360°.

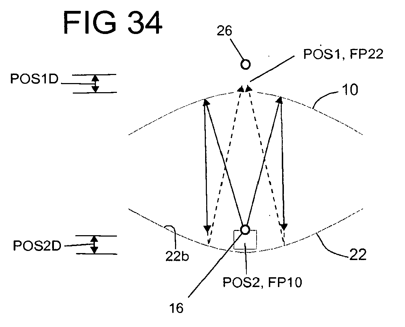

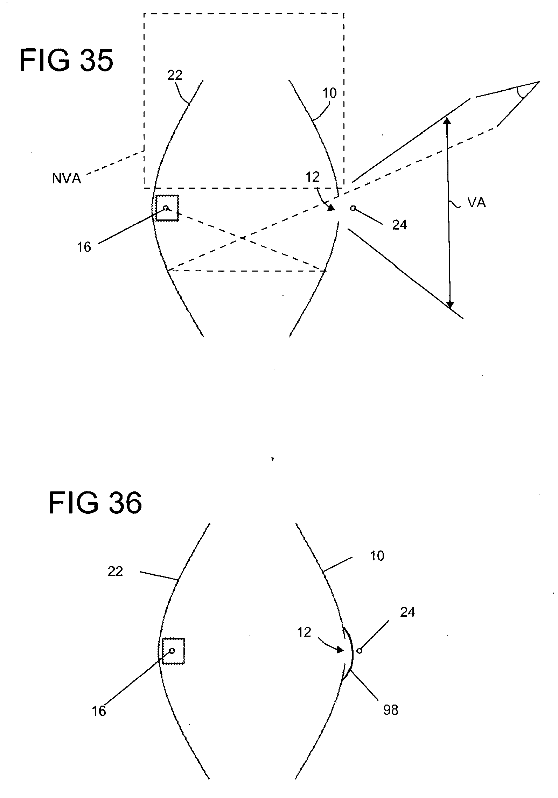

Referring now to Figs. 34 and 35, further features will now be described. In the illustration being described, it should be understood that the first and second parabolic mirrors 10 and 22 may be scaled to fit the particular environment, such as the vehicle 44 (Fig. 33). In one illustration, the second parabolic mirror 22 is a 110 mm parabolic surface base mirror with a focal point FP22 at the virtual or real object 26 location. Note in the illustration, that the location of the actual object 16 is approximately 10 mm off of the surface 22b of the second parabolic mirror 22, which position generally corresponds to the focal point FP10 of the first parabolic mirror 10. In the illustration being described, the first parabolic mirror 10 has a parabolic shape with a 90 mm focal length.

The first parabolic mirror 10 comprises the aperture 12 which has a radius of approximately 30 mm. Again, it should be appreciated that the various sizes of the first and second parabolic mirrors 10, 22 and the aperture 12 may be scaled as desired and they do not have to be the same size. In the illustration being described, the first and second parabolic mirrors 10 and 22 comprise a radius size of approximately 140 mm and can be modified based on the object 16 being projected. In the illustration, the object 16 could be approximately 20 mm high by 40 mm round, although these dimensions can change and the object 16 does not necessarily have to be round. Note that in general, the position POS2 that separates the position POS2 of the actual object 16 from the surface 22b of second parabolic mirror 22 generally corresponds to the focal point FP10 of the first parabolic mirror 10. Accordingly, a position of the virtual image 26 outside of the aperture 12 may be adjusted by scaling or altering the dimensions of the first and second parabolic mirrors 10 and 12 by, for example, changing their respective focal points. It has been found that the closer in size that the first and second parabolic mirrors 10 and 22 are, the better the virtual image 26 reproduces the image of the object 16. As mentioned, the first and second parabolic mirrors 10 and 22 do not have to be the same size and the size and shape of either can be changed with respect to the other, which also means that the focal points FP10 and FP22, respectively, of the first and second parabolic mirrors 10 and 22 do not have to be the same and can be changed. Again, however, it has been found that the closer the first and second parabolic mirrors 10 and 22 are in shape and size, the better the object 16 is reproduced as the virtual image 26.

Another feature of the embodiments being described is that the aperture 12 can be scaled or enlarged or reduced in size to better accommodate the environment in which the system is used and to facilitate improving viewing angles VA (Fig. 35). For example, Fig. 35 illustrates the use of the system as it would be used on a vehicle, such as the vehicle 44 illustrated in Fig. 33. Note that the size of the device and aperture 12 may be adjusted so that the viewing angle VA is optimized for view by a person. In this illustration, note that some portions of the viewing angle VA may not be necessary. For example, if the aperture 12 viewing angle VA is five feet above ghe ground and the device is three feet off the ground (e.g., such as if it were mounted at this level on a vehicle), then the entire top half of the viewing angle VA (i.e., the portion of the device within the dashed box labeled NVA in Fig. 35) is not needed because people would not view the image from below three feet.

In general, the optimal place for the focal point FP22 is slightly above or outside the aperture 12. In other words, the focal point FP10 should be slightly outside the mirror 10.

It should be understood that it is possible to place a lens or cover 98 over the aperture 12 as illustrated in Fig. 36. In this regard, the lens or cover 98 may be mounted directly on the mirror 10 or may be mounted on the vehicle 44 in order to close the cavity inside the device. In a preferred embodiment, the lens or cover 98 may have optics, but in a preferred form, it is transparent glass or plastic without any optics so that the virtual image 26 is not distorted. It should also be appreciated that the lens or cover 98 could be colorless or it could be colored if desired, which in turn would change the color of the virtual image 26 being projected.

It should be understood that if the ratio of the focal length of the focal points is 1 to 1 then the virtual image 26 will appear to be identical to the real object 16. In the illustration being described, the base parabolic mirror 22 is 110 mm focal distance compared to a 90 mm focal distance of the top parabolic mirror 10, so a 1.1 to 0.9 ratio. This preferred ratio makes the virtual image 26 appear to be magnified from real object 16 or about 20% bigger. This approximately matches the ratio difference 1.1/0.9 - 1 = .22 or 22%. It should be understood that these measurements are all approximate, since the virtual image 26 is not "real" and it is just perceived.

This invention, including all embodiments shown and described herein, could be used alone or together and/or in combination with one or more of the features covered by one or more of the claims set forth herein, including but not limited to one or more of the features or steps mentioned in the Summary of the Invention and the claims.

While the system, apparatus, process and method herein described constitute preferred embodiments of this invention, it is to be understood that the invention is not limited to this precise system, apparatus, process and method, and that changes may be made therein without departing from the scope of the invention which is defined in the appended claims.

## Claims

1. An image generator for a vehicle, comprising:
a physical object; and
generates or causes light rays originating at said physical object to form a real image of said physical object in relationship to an aperture.

2. The image generator according to claim 1, wherein said real image is displayed inside said vehicle and contains information which is used by a person riding in said vehicle in operating a component of said vehicle.

3. The image generator according to claim 1, wherein said real image contains information which identifies a characteristic of said vehicle or a manufacturer of said vehicle.

4. The image generator according to claim 2, wherein said information comprises three-dimensional alphanumeric characters.

5. The image generator according to claim 1, wherein said physical object comprises a light source.

6. The image generator according to claim 1, wherein said real image forms a lighting or signaling light for said vehicle.

7. The image generator according to claim 1, wherein said image is a decorative element of said vehicle.

8. The image generator according to claim 1, wherein said apparatus comprises:
a first concave mirror having a first concavity; and
a second concave mirror having a second concavity;
wherein each of said first concave mirror and said second concave mirror are generally opposed to each other and said first concavity and said second concavity form a chamber;
wherein said physical object is located within said chamber.

9. The image generator as recited in claim 8 wherein the first concave mirror and said second concave mirror each comprise a reflective side that generally oppose each other.

10. The image generator according to claim 8, wherein said image generator comprises a plurality of pairs or sets of said first concave mirror and said second concave mirror, said pairs or sets generating a plurality of images that cooperate to define said real image.

11. The image generator according to claim 1, wherein said first concave mirror has a wall that defines an aperture through which said image generator directs light from said physical object to cause said real image to be generated outside said aperture.

12. The image generator according to claim 1, wherein said image generator is mounted in a headlamp assembly of a vehicle.

13. The image generator according to claim 8, wherein said image is visible outside said chamber.

14. The image generator according to claim 8, wherein said physical object is located at a focus of one of said first concave mirror or said second concave mirror.

15. A system for mounting on a vehicle comprising:
a first concave mirror;
a second concave mirror generally opposed to and facing said first concave mirror and having an aperture;
an object located between said first concave mirror and said second concave mirrors which is reflected into a real image in relationship to said aperture.

16. The system according to claim 15, wherein said system further comprises:
said first concave mirror having a first concavity; and
said second concave mirror having a second concavity;
wherein each of said first concave mirror and said second concave mirror are generally opposed to each other and said first concavity and said second concavity form a chamber;
wherein said object is located within said chamber and said real image is formed outside said chamber.

17. The system according to claim 15, wherein said image comprises indicia that identifies at least one of an alphanumeric character, a numeric character, a non-numeric character, a trademark or a logo.

18. The system according to claim 15, wherein said system comprises a lens or cover associated with said aperture.

19. The image generator according to claim 1, wherein a ratio of focal points is the same.

20. The image generator according to claim 1, wherein a ratio of focal points is different.
